# EUROPEAN PATENT APPLICATION

(11) **EP 1 189 478 A2**
(43) Date of publication of application: **20.03.2002**
(21) Application number: 01120819.6
(22) Date of filing: 29.08.2001
(51) Int. Cl.: H04Q 11/00

(54) **Self-healing apparatus and method of optical receiver**

(30) Priority: 05.09.2000 KR 2000052343
(71) Applicant: SAMSUNG ELECTRONICS CO., LTD., Suwon-City, Kyungki-do (KR)
(72) Inventor: Kim, Sang-Ho, c/o Samsung Electronics Co.,Ltd., Suwon-city, 442-370, Kyungki-do (KR); Oh, Yun-Je, c/o Samsung Electronics Co.,Ltd., Suwon-city, 442-370, Kyungki-do (KR); Hwang,Seong-Taek, c/o Samsung Electronics Co.,Ltd., Suwon-city, 442-370, Kyungki-do (KR); Koh, Jun-Ho, c/o Samsung Electronics Co.,Ltd., Suwon-city, 442-370, Kyungki-do (KR)
(74) Representative: Grünecker, Kinkeldey, Stockmair & Schwanhäusser Anwaltssozietät

(57) **Abstract**

Disclosed is a self-healing apparatus and method of an optical receiver, which are capable of avoiding errors from occurring upon determining bit rate due to a variation in temperature in the optical receiver. The self-healing apparatus includes an optoelectric converting unit for converting an input optical signal into an electrical signal as a receiving signal, an amplifying unit for amplifying the receiving signal outputted from the optoelectric converting unit, a bit rate discriminating unit for exclusively ORing the receiving signal with a delay signal delayed from the amplified receiving signal by a predetermined time, thereby outputting a recognition signal, a clock/data reproducing unit for receiving the receiving signal, and reproducing clocks and data, based on a reference clock, a bit rate signal generating unit for generating the reference clock in response to a bit rate change signal, a temperature sensing unit for outputting a temperature sensing signal indicative of an internal temperature of the optical receiver, and a control unit for determining a bit rate of the receiving signal, based on a value selected from temperature-dependent voltage level variation values, previously stored, on the basis of a voltage level of the recognition signal outputted from the bit rate discriminating unit and the internal temperature of the optical receiver corresponding to the temperature sensing signal, and outputting the bit rate change signal, based on the determined bit rate.

## Description

The present invention relates to an optical communication system, and more particularly to an optical receiver of an optical cross-connect device.

In an optical communication system, an optical cross-connect device is installed at an intermediate node connecting an upper node, such as a central base station, and a lower node, such as a subscriber, with each other. Such an optical cross-connect device has important functions to optimize traffic on an optical network and the growth of the network while improving an abnormal congestion and survivability of the network, in addition to basic functions for transfer and allocation of channel signals. In particular, an optical cross-connect device used in a wavelength division multiplexing (WDM) system includes a demultiplexer, an optical receiver, a cross-connect switch, a controller, an optical transmitter, and a multiplexer.

Meanwhile, diverse transfer formats, called "protocols", are applied to optical communication systems. Transfer of information may be carried out at different bit rates in accordance with different transfer formats, respectively. As representative transfer formats, there are SDH/SONET (Synchronous Digital Hierarchy/Synchronous Optical NETwork), FDDI (Fiber Distributed Data Interface), ESCON (Enterprise Systems CONnectivity), optical fiber channel, gigabit Ethernet, and ATM (Asynchronous Transfer Mode), which may have diverse bit rates of, for example, 125 Mb/s, 155 Mb/s, 200 Mb/s, 622 Mb/s, 1,062 Mb/s, 1.25 Gb/s, and 2.5 Gb/s, respectively.

As mentioned above, optical signals may be inputted to the optical receiver of an optical cross-connect device at diverse bit rates. To this end, the optical receiver is provided with self-healing means for bit rate so that it has a flexibility to meet diverse protocols with different bit rates without being dependent on the bit rate of an input optical signal.

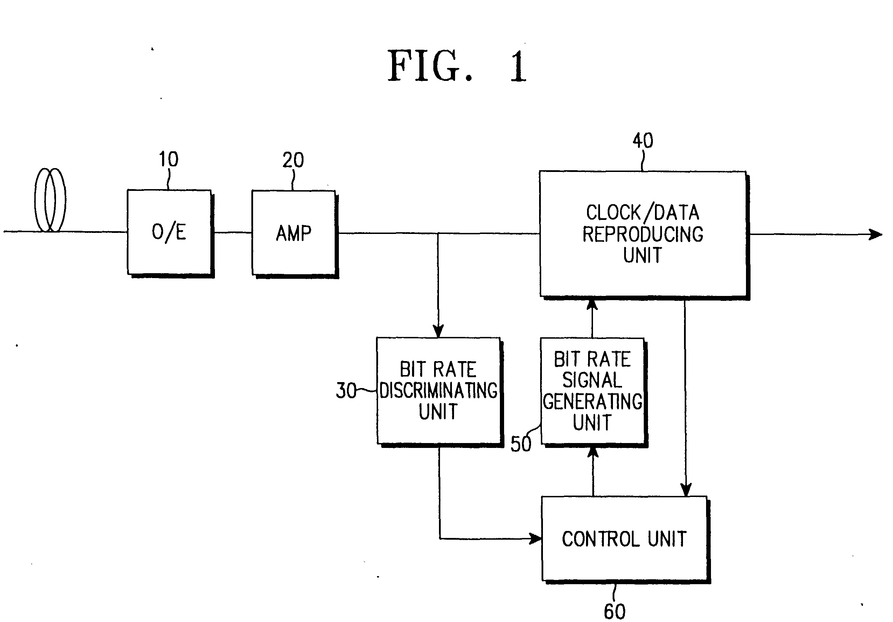

Fig. 1 is a block diagram illustrating the configuration of a conventional self-healing apparatus employed in an optical receiver. As shown in Fig. 1, the conventional self-healing apparatus includes an optoelectric converting unit 10 for converting an input optical signal into an electrical signal as a receiving signal, an amplifying unit for amplifying the receiving signal outputted from the optoelectric converting unit 10, and a bit rate discriminating unit 30 for outputting a recognition signal generated by exclusively ORing the receiving signal with a delay signal generated by delaying the amplified receiving signal by a predetermined time. The self-healing apparatus also includes a clock/data reproducing unit 40 for receiving the receiving signal, and reproducing clocks and data, based on a reference clock, a bit rate signal generating unit 50 for generating the reference clock in response to a bit rate change signal, and a control unit 60 for determining the bit rate of the receiving signal, based on the voltage level of the recognition signal outputted from the bit rate discriminating unit 30, and outputting the bit rate change signal, based on the determined bit rate.

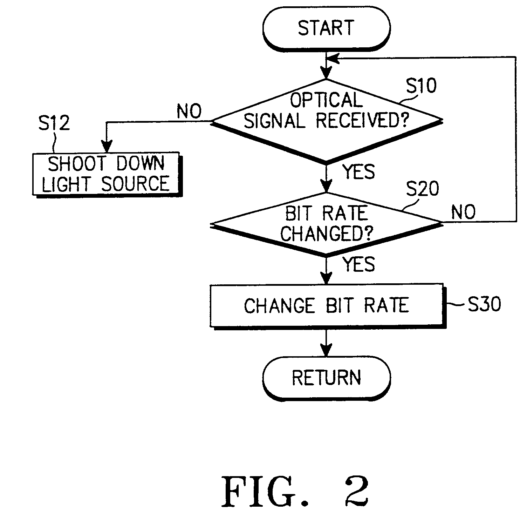

Fig. 2 is a flow chart illustrating a conventional self-healing procedure performed by the control unit. As shown in Fig. 2, the self-healing procedure involves the steps of determining whether or not there is an optical signal received in the optical receiver, based on whether or not there is a LOS signal outputted from the amplifying unit 20 (Step S10), determining whether or not there is a change in the bit rate of the received optical signal, based on the voltage level of a recognition signal generated in association with the received optical signal (Step S20), and, if it is determined at step S20 that there is a change in bit rate, then outputting, to the bit rate signal generating unit 50, a bit rate change signal corresponding to the changed bit rate.

However, the above described conventional self-healing device involves a high probability that errors will occur in determining bit rate due to a variation in temperature occurring in the optical receiver, because there is no compensation means for effects resulting from the temperature variation. That is, the DC level of the recognition signal is used as a reference for determination of bit rate, as it is, without any compensation therefor made in association with a variation in temperature, even though it is varied, depending on temperature. For this reason, there is a problem in that errors may occur in determining bit rate.

Therefore, the object of the invention is to provide a self-healing apparatus and method of an optical receiver, which is capable of avoiding errors upon determining bit rate due to a variation in temperature in the optical receiver.

In accordance with one aspect, the present invention provides a self-healing apparatus of an optical receiver comprising:
an optoelectric converting unit for converting an input optical signal into an electrical signal;
an amplifying unit for amplifying the electrical signal outputted from the optoelectric converting unit;
a bit rate discriminating unit for exclusively ORing the amplified electrical signal with a delay signal delayed from the amplified electrical signal by a predetermined time, thereby outputting a recognition signal;
a clock/data reproducing unit for receiving the electrical signal, and reproducing clocks and data, based on a reference clock;
a bit rate signal generating unit for generating the reference clock in response to a bit rate change signal;
a temperature sensing unit for outputting a temperature sensing signal indicative of an internal temperature of the optical receiver; and
a control unit for determining a bit rate of the electrical signal, based on a value selected from temperature-dependent voltage level variation values, previously stored, on the basis of a voltage level of the recognition signal outputted from the bit rate discriminating unit and the internal temperature of the optical receiver corresponding to the temperature sensing signal, and outputting the bit rate change signal, based on the determined bit rate.

In accordance with another aspect, the present invention provides a self-healing method in an optical receiver including a temperature sensing unit, a bit rate discriminating unit, and a clock/data reproducing unit, comprising:
an optical signal reception determining step of determining whether or not there is an optical signal received in the optical receiver, based on whether or not there is a LOS signal;
a clock/data reproducing unit stabilization determining step of, if it is determined that there is an optical signal received in the optical receiver, determining whether or not the clock/data reproducing unit is in a stabilized state, based on whether or not there is a locking signal outputted from the clock/data reproducing unit;
a current temperature detecting step of, if it is determined that the clock/data reproducing unit is in a non-stabilized state, detecting a current internal temperature of the optical receiver, based on an internal temperature sensing signal outputted from the temperature sensing unit;
a DC level detecting step of detecting a level of DC outputted from the bit rate discriminating unit;
a bit rate determining step of determining a bit rate of the receiving signal, based on the current internal temperature of the optical receiver detected at the current temperature detecting step and the DC level detected at the DC level detecting step, while using a table in which variations in DC level respectively depending on different temperatures are previously stored; and
a bit rate change signal outputting step of outputting, to the clock/data reproducing unit, a bit rate change signal based on the bit rate determined at the bit rate determining step.

The above object and advantages of the present invention will become more apparent by describing in detail preferred embodiments thereof with reference to the attached drawings in which:
Fig. 1 is a block diagram illustrating the configuration of a conventional self-healing apparatus employed in an optical receiver;
Fig. 2 is a flow chart illustrating a conventional self-healing procedure performed by the control unit;
Fig. 3 is a block diagram illustrating a self-healing apparatus of an optical receiver according to a preferred embodiment of the present invention; and
Fig. 4 is a flow chart illustrating a self-healing method according to a preferred embodiment of the present invention.

In the following description made in conjunction with a preferred embodiment of the present invention, a variety of specific elements such as constituent elements are described. The description of such elements has been made only for a better understanding of the present invention. Those skilled in the art will appreciate that the present invention can be implemented without using the above mentioned specific elements. In the following description of the present invention, a detailed description of known functions and configurations incorporated herein will be omitted when it may make the subject matter of the present invention rather unclear.

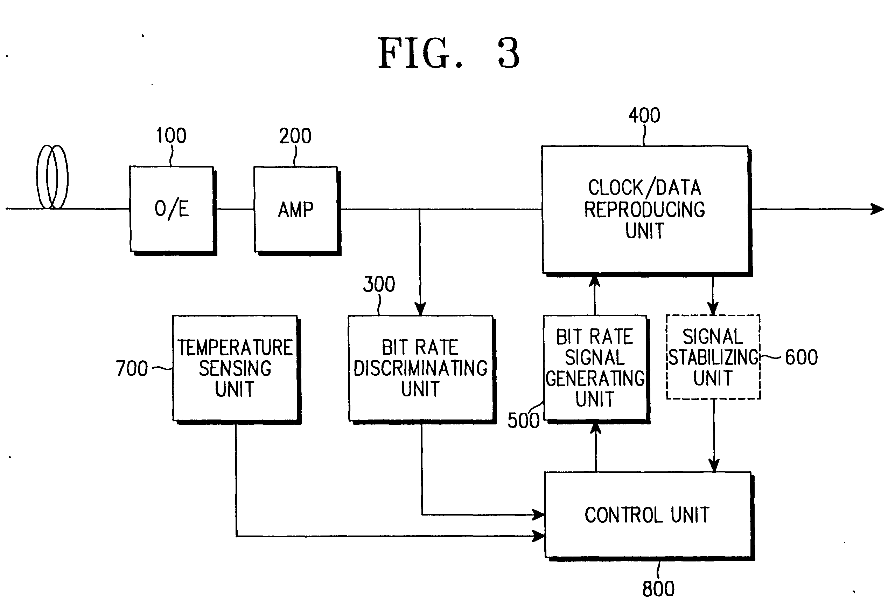

Fig. 3 is a block diagram illustrating a self-healing apparatus of an optical receiver according to a preferred embodiment of the present invention. As shown in Fig. 3, the self-healing apparatus includes an optoelectric converting unit 100, an amplifying unit 200, a bit rate discriminating unit 300, a clock/data reproducing unit 400, a bit rate signal generating unit 500, a signal stabilizing unit 600, a temperature sensing unit 700, and a control unit 800.

The optoelectric converting unit 100 converts an input optical signal into an electrical signal as a receiving signal. The amplifying unit 200 amplifies the receiving signal outputted from the optoelectric converting unit 100.

The bit rate discriminating unit 300 exclusively ORs the receiving signal with a delay signal generated by delaying the amplified receiving signal by a predetermined time, thereby outputting a recognition signal.

The clock/data reproducing unit 400 receives the receiving signal, and reproduces clocks and data, based on a reference clock.

The bit rate signal generating unit 500 generates the reference clock in response to a bit rate change signal.

The signal stabilizing unit 600 filters a locking signal outputted from the clock/data reproducing unit 400.

The temperature sensing unit 700 outputs a temperature sensing signal indicative of the internal temperature of the optical receiver.

The control unit 800 determines the bit rate of the receiving signal, based on a value selected from temperature-dependent voltage level variation values, previously stored, on the basis of a voltage level of the recognition signal outputted from the bit rate discriminating unit 300 and the internal temperature of the optical receiver corresponding to the temperature sensing signal, and outputting the bit rate change signal, based on the determined bit rate.

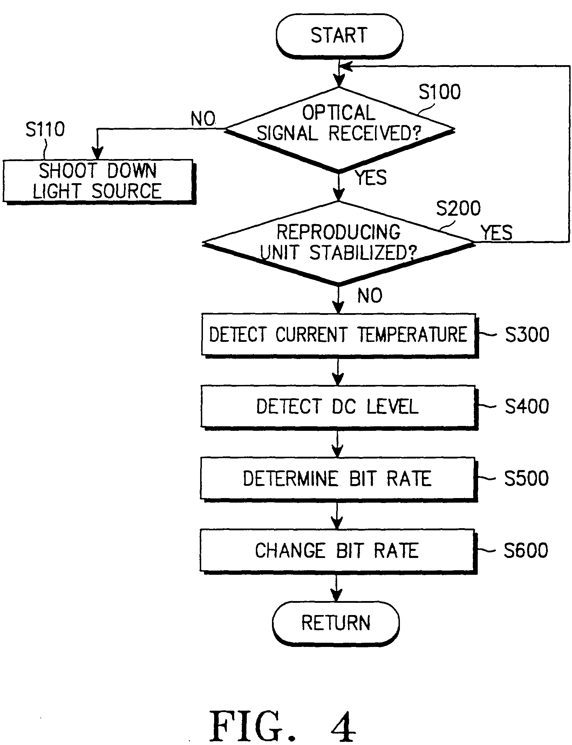

Fig. 4 is a flow chart illustrating a self-healing method according to a preferred embodiment of the present invention. As shown in Fig. 4, the self-healing method involves an optical signal reception determining step S100, a clock/data generating unit stabilization determining step S200, a current temperature detecting step S300, a DC level detecting step S400, a bit rate determining step S500, and a bit rate change signal outputting step S600.

At optical signal reception determining step S100, it is determined whether or not there is an optical signal received in the optical receiver, based on whether or not there is a LOS signal. Where no optical signal is received, the procedure proceeds to a light source shoot-down step S110.

The clock/data reproducing unit stabilization determining step S200 is a step of, if it is determined that an optical signal is received, then determining whether or not the clock/data reproducing unit 400 is in a stabilized state, based on whether or not there is a locking signal outputted from the clock/data reproducing unit 400. Where there is a PLL (Phase Locked Loop) locking signal outputted from the clock/data reproducing unit 400, it is determined at clock/data reproducing unit stabilization determining step S200 that the clock/data reproducing unit 400 is in a stabilized state. On the other hand, where a "PLL loss of lock" signal is outputted from the clock/data reproducing unit, it is determined that the clock/data reproducing unit 400 is in a non-stabilized state.

Where the clock/data reproducing unit 400 is in a non-stabilized state, the internal temperature of the optical receiver is detected, based on an internal temperature sensing signal outputted from the temperature sensing unit 700, at current temperature detecting step S300.

The DC level detecting step S400 is a step of detecting the level of DC outputted from the bit rate discriminating unit 300.

The bit rate determining step S500 is a step of determining the bit rate of the receiving signal, based on the current internal temperature of the optical receiver detected at current temperature detecting step S300 and the DC level detected at DC level detecting step S400, while using a table in which diverse variations in DC level respectively depending on diverse temperatures are previously stored. The temperature-dependent DC level variation table is a look-up table stored in a memory. As a DC level variation depending on a variation in temperature is taken into consideration at bit rate determining step S500, it is possible to reduce errors occurring upon the bit rate determination.

The bit rate change signal outputting step S600 is a step of outputting, to the clock/data reproducing unit 400, a bit rate change signal based on the bit rate determined at bit rate determining step S500.

As apparent from the above description, the present invention provides a self-healing apparatus and method of an optical receiver, in which a variation in DC level depending on a variation in the internal temperature of the optical receiver is taken into consideration upon determining the bit rate of a receiving signal inputted to the optical receiver, thereby being capable of avoiding errors from occurring upon the bit rate determination.

## Claims

1. A self-healing apparatus of an optical receiver comprising:
an optoelectric converting unit for converting an input optical signal into an electrical signal;
an amplifying unit for amplifying the electrical signal outputted from the optoelectric converting unit;
a bit rate discriminating unit for exclusively ORing the amplified electrical signal with a delay signal delayed from the amplified electrical signal by a predetermined time, thereby outputting a recognition signal;
a clock/data reproducing unit for receiving the electrical signal, and reproducing clocks and data, based on a reference clock;
a bit rate signal generating unit for generating the reference clock in response to a bit rate change signal;
a temperature sensing unit for outputting a temperature sensing signal indicative of an internal temperature of the optical receiver; and
a control unit for determining a bit rate of the electrical signal, based on a value selected from temperature-dependent voltage level variation values, previously stored, on the basis of a voltage level of the recognition signal outputted from the bit rate discriminating unit and the internal temperature of the optical receiver corresponding to the temperature sensing signal, and outputting the bit rate change signal, based on the determined bit rate.

2. The self-healing apparatus according to claim 1, further comprising:
a signal stabilizing unit for filtering a locking signal outputted from the clock/data reproducing unit, and outputting the filtered signal to the control unit.

3. A self-healing method in an optical receiver including a temperature sensing unit, a bit rate discriminating unit, and a clock/data reproducing unit, comprising:
determining whether or not there is an optical signal received in the optical receiver, based on whether or not there is a LOS signal;
if it is determined that there is an optical signal received in the optical receiver, determining whether or not the clock/data reproducing unit is in a stabilized state, based on whether or not there is a locking signal outputted from the clock/data reproducing unit;
if it is determined that the clock/data reproducing unit is in a non-stabilized state, detecting a current internal temperature of the optical receiver, based on an internal temperature sensing signal outputted from the temperature sensing unit;
detecting a level of DC outputted from the bit rate discriminating unit;
determining a bit rate of an electrical signal representing the received optical signal, based on the current internal temperature of the optical receiver and the detected DC level, while using a table in which variations in DC level respectively depending on different temperatures are previously stored; and
outputting, to the clock/data reproducing unit, a bit rate change signal based on the bit rate determined at the step of determining a bit rate.
